# FASCICULE DE BREVET EUROPEEN

(11) **EP 3 887 122 B1**
(45) Date de publication et mention de la délivrance du brevet: **23.11.2022**
(21) Numéro de dépôt: 19868182.7
(22) Date de dépôt: 27.11.2019
(51) Int. Cl.: B29C 45/28

(54) **SYSTÈME DE COMMANDE D'UN OBTURATEUR D'UN SYSTÈME D'INJECTION DE MATIÈRE PLASTIQUE**
SYSTEM ZUR STEUERUNG EINER BLENDE EINES KUNSTSTOFFEINSPRITZSYSTEMS
SYSTEM FOR CONTROLLING A SHUTTER OF A PLASTIC MATERIAL INJECTION SYSTEM

(30) Priorité: 28.11.2018 FR 1872029
(43) Date de publication de la demande: 06.10.2021
(73) Titulaire: Runipsys Europe, 73420 Méry (FR)
(72) Inventeur: DERICHE, Eric, 73420 Mery (FR)
(74) Mandataire: Regimbeau
(86) Numéro de dépôt international: PCT/FR2019/052813
(87) Numéro de publication internationale: WO 2020/109719

(56) Documents cités:
- CN-U- 204 019 889
- US-A- 6 086 357

## Description

### DOMAINE DE L'INVENTION

La présente invention concerne un système de commande d'un obturateur agencé en coulissement dans une buse d'injection de matière plastique.

### ARRIERE PLAN DE L'INVENTION

Un système d'injection de type « bloc chaud » ou « à canaux chauds » (« hot runner » selon la terminologie anglo-saxonne) comporte habituellement :
- un distributeur délimitant un canal de distribution de matière plastique et comportant une sortie de matière thermoplastique, ledit distributeur comprenant des moyens permettant de maintenir sa température, et par conséquent celle de la matière transitant dans le canal de distribution, à une température supérieure à la température limite de passage à l'état fluide de la matière.
- une buse d'injection définissant au moins une portion d'un passage de transit dont l'entrée est en liaison fluidique avec la sortie du canal de distribution, et dont la sortie débouche sensiblement dans l'empreinte de moulage,
- un obturateur monté à coulissement longitudinal à l'intérieur du passage de transit et occupant de manière alternée une position d'obturation et une position d'ouverture de celui-ci,
- des moyens de commande pour faire coulisser alternativement l'obturateur entre la position d'obturation et la position d'ouverture.

Ces moyens de commande peuvent comprendre un vérin hydraulique, un vérin pneumatique ou un vérin électrique.

Le contrôle de l'ouverture et de la fermeture de l'obturateur revêt une importance particulière pour la qualité des pièces formées dans l'empreinte de moulage, notamment dans le cas d'une injection séquentielle, c'est-à-dire lorsque l'empreinte de moulage est alimentée par plusieurs buses d'injection dont l'ouverture et la fermeture sont décalées temporellement.

Par rapport aux technologies hydrauliques et pneumatiques, un actionneur électrique présente l'avantage de permettre un contrôle plus précis et reproductible de la position de l'obturateur et par conséquent du flux de matière du distributeur vers l'empreinte de moulage. Par ailleurs, un tel actionneur est également plus propre et présente une durée de vie plus longue du fait de l'absence d'huile.

En général, l'actionneur comprend un moteur électrique rotatif, qui présente donc un arbre de sortie entraîné en rotation. Différents mécanismes ont déjà été décrits pour coupler l'arbre de sortie à l'obturateur et convertir la rotation de l'arbre de sortie en translation de l'obturateur.

Le document US 6,294,122 décrit ainsi un système basé sur un mécanisme de type vis-écrou qui est un moyen connu pour convertir une rotation en translation. Selon un mode de réalisation, l'arbre de sortie est coaxial avec l'obturateur et fixé directement à l'élément du mécanisme vis-écrou qui est mobile en translation. Cependant, l'actionneur étant agencé sur la face arrière du distributeur (c'est-à-dire la face opposée à l'empreinte de moulage), une telle solution est particulièrement encombrante et augmente sensiblement l'épaisseur du moule. Selon un autre mode de réalisation, l'arbre de sortie est perpendiculaire à l'obturateur et au mécanisme vis-écrou, et couplé à la vis par un engrenage. Cependant, même si l'encombrement dans le sens de l'épaisseur peut être réduit grâce à cet agencement de l'actionneur, l'engrenage est soumis à une usure importante et des problèmes de friction, susceptibles de réduire la précision du contrôle de la position de l'obturateur.

Le document EP 2 679 374 vise à réduire l'encombrement en épaisseur du bloc chaud, en agençant l'actionneur sur un côté du distributeur, avec son arbre de sortie parallèle à l'obturateur. Un mécanisme incluant une vis à bille permet de convertir le mouvement de rotation de l'arbre de sortie de l'actionneur en un mouvement de translation qui permet d'actionner un basculeur couplé à l'obturateur. Cependant, ce mécanisme est particulièrement complexe et, même si une partie de l'actionneur est déportée sur un côté du distributeur, il reste encombrant.

Le document EP 2 918 389 décrit quant à lui un système dans lequel l'actionneur électrique est agencé dans une semelle située sur la face arrière du moule, l'arbre de sortie et le mécanisme vis-écrou étant agencés parallèlement l'un à l'autre et perpendiculairement à l'obturateur, l'obturateur étant couplé à l'élément du système vis-écrou mobile en translation par un levier oscillant.

Enfin, le document US 6,086,357 décrit un système dans lequel une came excentrique est entraînée en rotation par l'arbre de sortie du moteur par rapport à un axe perpendiculaire à l'obturateur, la rotation de la came engendrant un mouvement alternatif en translation de l'obturateur. Cependant, un tel système est soumis à des dilatations thermiques importantes, qui sont susceptibles de réduire la précision de l'obturation.

### BREVE DESCRIPTION DE L'INVENTION

Un but de l'invention est de concevoir un système d'injection dans lequel l'obturateur est commandé par un actionneur électrique, dont l'encombrement en épaisseur soit réduit par rapport aux solutions connues.

Conformément à l'invention, il est proposé un système de commande d'un obturateur agencé en coulissement dans une buse d'injection de matière plastique, comprenant un moteur électrique rotatif et un mécanisme adapté pour coupler ledit moteur à l'obturateur pour l'entraîner en coulissement entre une position d'obturation de la buse et une position d'ouverture maximale de la buse, caractérisé en ce que ledit mécanisme comprend :
- un excentrique solidaire d'un arbre de sortie du moteur de sorte à être entraîné en rotation par ledit arbre de sortie, comprenant un maneton parallèle à l'arbre de sortie mais non coaxial avec ledit arbre,
- un coulisseau adapté pour être solidarisé à une extrémité de l'obturateur, et
- une bielle dont une première extrémité est articulée sur le maneton de l'excentrique et une seconde extrémité est articulée sur un axe du coulisseau de sorte que la rotation de l'excentrique engendre un coulissement de l'obturateur oscillant entre la position d'obturation et la position d'ouverture maximale.

Ce système présente plusieurs avantages.

D'une part, son encombrement est limité. En particulier, l'actionneur électrique peut être agencé dans un logement de la semelle prévu habituellement pour un vérin hydraulique ou pneumatique. Un changement d'énergie d'actionnement peut donc être réalisé aisément.

D'autre part, le rendement d'actionnement est amélioré grâce à la conversion directe de la rotation de l'arbre de sortie en translation de l'obturateur.

Par ailleurs, par rapport à un système à levier, le système selon l'invention consomme peu d'énergie dans les deux positions extrêmes de l'obturateur (ouverture complète ou fermeture complète) car ces deux positions sont des positions d'équilibre stable du mécanisme.

Selon d'autres caractéristiques avantageuses de l'invention, éventuellement combinées :
- l'axe de rotation de l'arbre de sortie du moteur électrique est perpendiculaire à l'axe de coulissement de l'obturateur ;
- le système comprend un guide dans lequel ledit coulisseau est agencé en coulissement ;
- selon un mode de réalisation, l'extrémité de l'obturateur comprend une collerette radiale et le coulisseau comprend une fente adaptée pour recevoir ladite collerette, ladite fente s'étendant dans un plan perpendiculaire à la direction (X) de coulissement de l'obturateur ;
- selon un autre mode de réalisation, le coulisseau comprend une fente et une rondelle apte à se déplacer radialement dans ladite fente, et l'extrémité de l'obturateur est solidarisée à ladite rondelle.

Un autre objet de l'invention concerne un système d'injection de matière plastique, comprenant :
- un distributeur comprenant au moins une buse d'injection,
- au moins un obturateur monté en coulissement dans la buse d'injection entre une position d'obturation de la buse et une position d'ouverture maximale de la buse,
- une semelle comprenant un logement dans lequel est agencé le système de commande de l'obturateur tel que décrit ci-dessus,
- une carte électronique de commande de l'actionneur, comprenant au moins deux composants parmi :
   un composant adapté pour réguler l'ouverture ou la fermeture de l'obturateur à une première vitesse constante,
   un composant adapté pour réguler l'ouverture ou la fermeture de l'obturateur à une seconde vitesse constante, supérieure à la première vitesse,
   un composant adapté pour sélectivement bloquer la rotation du moteur,
- une unité de commande séquentielle comprenant au moins deux voies de commande, configurée pour envoyer sélectivement un signal électrique de commande à la carte électronique par une desdites voies de commande de telle sorte que :
- sous l'effet d'un premier signal envoyé par une première voie de commande, l'un des composants est activé,
- sous l'effet d'un second signal envoyé par une seconde voie de commande, un autre composant est activé.

Selon un mode de réalisation, l'actionneur et/ou l'obturateur est pourvu d'un capteur de position et l'unité de commande séquentielle est configurée pour contrôler l'émission des signaux de commande en fonction des mesures fournies par ledit capteur de position.

Par ailleurs, l'unité de commande séquentielle peut être configurée pour prendre en outre en compte au moins l'une des données suivantes : un temps du procédé d'injection, une position d'un capteur, une pression ou une température dans l'outillage d'injection, un signal de la presse à injecter.

Selon un mode de réalisation, l'unité de commande séquentielle est configurée pour envoyer un signal électrique de commande sous la forme d'un courant continu.

De manière alternative, l'unité de commande séquentielle est configurée pour envoyer un signal électrique de commande sous la forme d'un courant alternatif.

L'invention concerne enfin un procédé de modification d'un système d'injection de matière plastique, dans lequel ledit système comprend :
- un distributeur comprenant au moins une buse d'injection,
- au moins un obturateur monté en coulissement dans la buse d'injection entre une position d'obturation de la buse et une position d'ouverture maximale de la buse,
- une semelle comprenant un logement dans lequel est agencé un vérin hydraulique ou pneumatique de commande de l'obturateur,
ledit procédé étant caractérisé en ce qu'il comprend le retrait du vérin et le remplacement dudit vérin dans le logement par un système de commande tel que décrit ci-dessus.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue partielle en perspective d'un système d'injection en l'absence de l'actionneur,
- la figure 2 est une vue d'un système de commande selon un mode de réalisation, à un premier stade d'assemblage,
- la figure 3 est une vue d'un système de commande selon un mode de réalisation, à un deuxième stade d'assemblage,
- la figure 4 est une vue d'un système de commande selon un mode de réalisation, à un troisième stade d'assemblage,
- la figure 5 présente des schémas comparatifs d'un système de commande selon l'invention et d'un système de commande selon l'état de la technique,
- la figure 6 présente d'autres schémas comparatifs d'un système de commande selon l'invention et d'un système de commande selon l'état de la technique,
- la figure 7 est une vue partielle en perspective d'un système d'injection avec un vérin hydraulique selon un mode de réalisation de l'invention ;
- la figure 8 est une vue partielle en perspective d'un système d'injection avec un actionneur électrique selon un mode de réalisation de l'invention, mettant en oeuvre un accouplement latéral de l'obturateur et du coulisseau ;
- la figure 9 est une vue partielle en perspective d'un système d'injection avec un actionneur électrique selon un autre mode de réalisation de l'invention, mettant en oeuvre un accouplement axial de l'obturateur et du coulisseau,
- la figure 10 est un schéma bloc d'un système de commande de l'obturateur selon une configuration de mise en oeuvre,
- la figure 11 est un schéma bloc d'un système de commande de l'obturateur selon une autre configuration de mise en oeuvre,
- la figure 12 est un graphe de la course de l'obturateur en fonction du temps au cours de deux cycles d'ouverture-fermeture de l'obturateur, susceptible d'être obtenue avec une configuration du système de commande,
- la figure 13 est un graphe de la course de l'obturateur en fonction du temps au cours d'un cycle d'ouverture-fermeture de l'obturateur, susceptible d'être obtenue avec une autre configuration du système de commande.

Les signes de référence identiques d'une figure à l'autre désignent des éléments identiques ou remplissant la même fonction.

### DESCRIPTION DETAILLEE DE MODES DE REALISATION DE L'INVENTION

De manière connue en elle-même, le système d'injection comprend un obturateur agencé en coulissement dans une buse d'injection de matière plastique.

La buse et l'obturateur sont connus en eux-mêmes et ne seront pas décrits en détail. S'agissant de l'architecture générale du système d'injection, l'homme du métier pourra se reporter à la description fournie dans le document EP 1 196 274 qui est applicable à la présente invention, hormis en ce qui concerne l'actionnement de l'obturateur (le document EP 1 196 274 décrivant un actionnement hydraulique).

D'une manière générale, le système de commande (actionneur) de l'obturateur comprend un moteur électrique rotatif et un mécanisme reliant l'arbre de sortie du moteur audit obturateur pour l'entraîner en coulissement entre une position d'obturation de la buse et une position d'ouverture maximale de la buse.

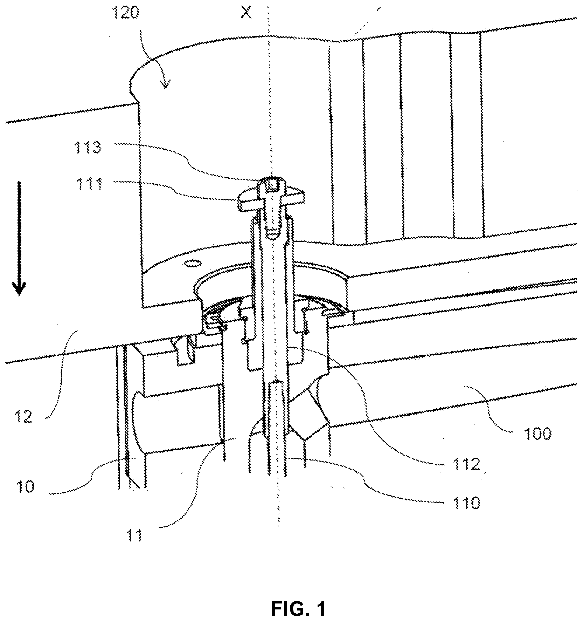

La figure 1 est une vue en perspective partielle du système d'injection en l'absence de l'actionneur.

Le système d'injection comprend un moule (non illustré) présentant une empreinte de moulage. De manière conventionnelle, les termes « arrière » et « avant » s'entendent dans le présent texte par rapport à la direction d'injection de la matière plastique dans l'empreinte de moulage, une région arrière étant en amont d'une région avant par rapport à cette direction d'injection. Cette direction est représentée par la flèche à gauche de la figure 1.

Le moule est pourvu d'au moins un puits d'injection débouchant dans l'empreinte de moulage et destiné à recevoir une buse respective, la buse et le puits étant coaxiaux.

Chaque buse 11 est solidaire d'un distributeur 10 qui comprend un canal 100 de distribution de matière plastique débouchant dans un passage de transit de la buse 11. Une seule buse est représentée sur la figure 1 mais, de préférence, le distributeur présente plusieurs buses d'injection réparties sur la surface du moule, permettant d'injecter la matière plastique de manière séquentielle dans l'empreinte de moulage. Une telle injection séquentielle vise à contrôler le flux de matière plastique au sein de l'empreinte de moule et à réduire voire supprimer les défauts visuels liés notamment à la rencontre de deux flux.

Le distributeur 10 est monté sur une semelle 12 fixée sur la face arrière du moule de manière à ce que le distributeur puisse subir une dilatation thermique par rapport à la semelle et au moule sans affecter le centrage de la buse par rapport au puits d'injection.

Un obturateur 110 est agencé en coulissement dans la buse 11 entre une position d'obturation empêchant le passage de matière plastique dans le passage de transit jusqu'à l'empreinte de moulage, et une position d'ouverture dans laquelle le flux de matière plastique peut s'écouler sans restriction du canal de distribution 100 dans le passage de transit. L'obturateur présente une forme générale de révolution autour d'un axe longitudinal X.

L'obturateur 110 présente, à son extrémité arrière, une collerette 111 s'étendant radialement par rapport à l'axe longitudinal X.

Dans le mode de réalisation illustré, l'obturateur 110 est solidarisé (par vissage ou tout autre moyen) à l'extrémité avant d'une tige 112 coaxiale avec l'obturateur. A l'extrémité arrière de ladite tige est fixée une rondelle annulaire formant la collerette 111, ladite rondelle étant solidarisée à la tige par un boulon 113 ou tout autre moyen. De manière alternative, la collerette pourrait faire partie intégrante de la tige.

La tige 112 permet de guider le coulissement de l'obturateur dans le passage de transit de la buse.

La semelle 12 comprend, dans sa partie arrière, un logement 120 destiné à recevoir l'actionneur. Comme cela sera exposé plus bas, l'actionneur est couplé à la partie arrière de l'ensemble obturateur 110/tige 112.

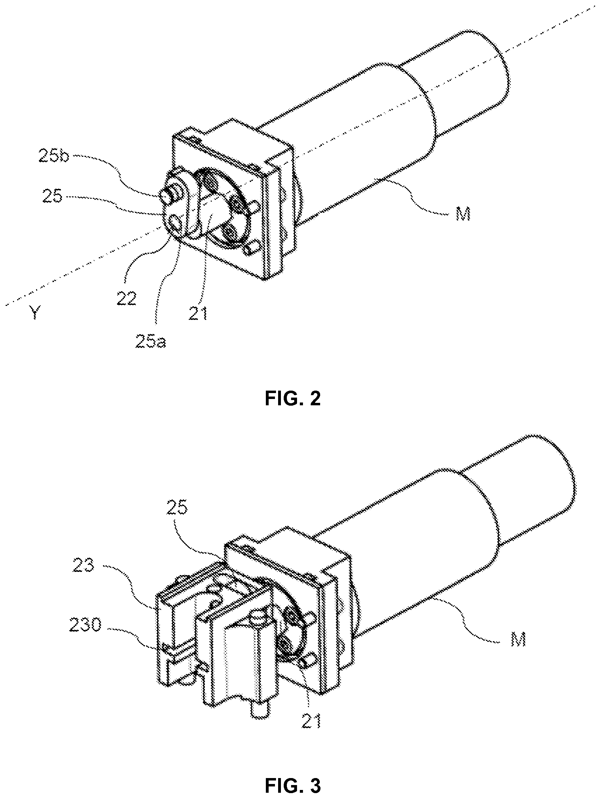

Les figures 2 à 4 sont des vues dudit actionneur à différents stades d'assemblage.

L'actionneur 2 comprend un moteur électrique M. Ledit moteur est avantageusement associé à un réducteur (non représenté) pour former un motoréducteur. Dans la suite du texte, le terme « moteur » inclut un motoréducteur.

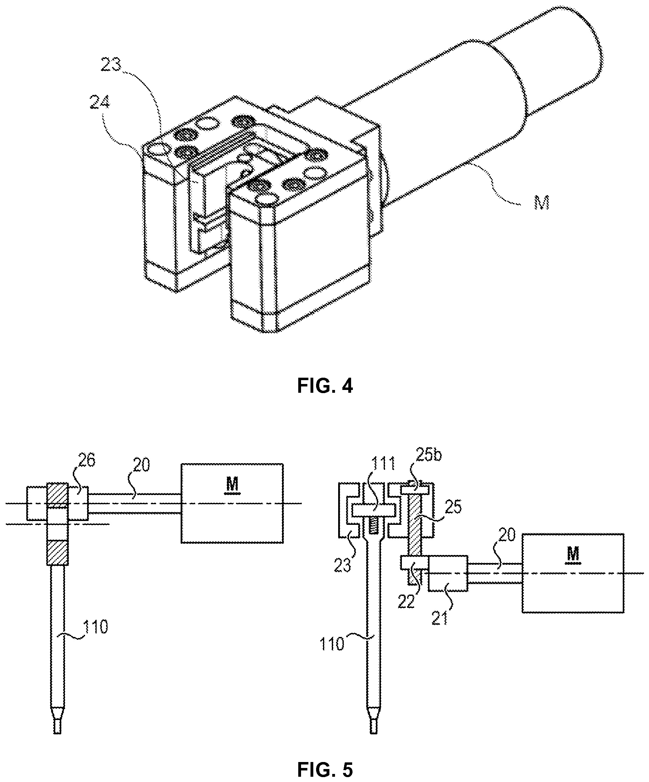

Le moteur comprend un arbre de sortie (désigné par le repère 20 sur la figure 5) mobile en rotation autour d'un axe Y qui est perpendiculaire à l'axe X de l'obturateur. La vitesse de rotation de l'arbre peut être ajustée en fonction d'un signal électrique de commande du moteur.

Le mécanisme de transmission de mouvement comprend un excentrique 21 qui est rigidement solidaire de l'arbre de sortie du moteur et est donc adapté pour être entraîné en rotation par ledit arbre. L'excentrique 21 comprend un maneton 22 parallèle à l'arbre de sortie du moteur mais non coaxial avec celui-ci.

Un coulisseau 23 est configuré pour être solidarisé à l'extrémité arrière de l'obturateur.

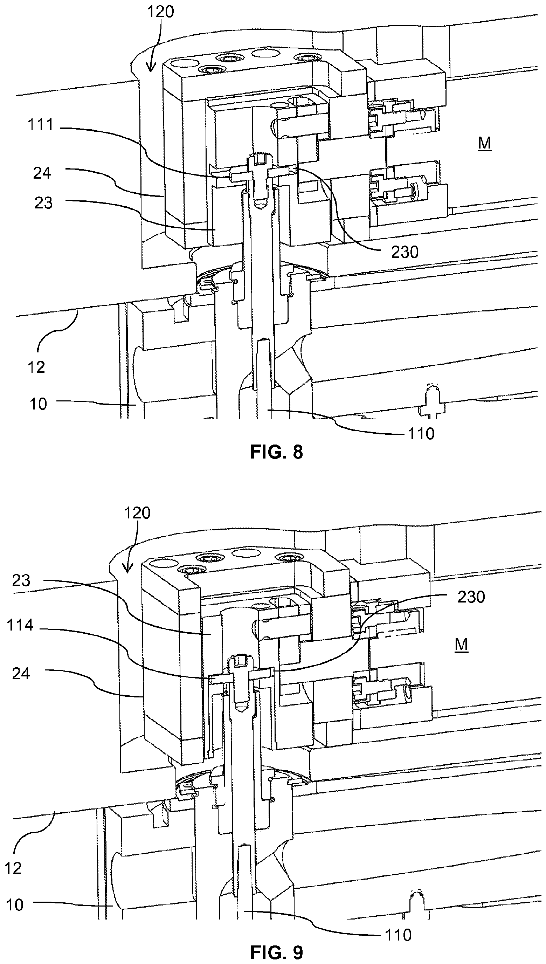

Selon un mode de réalisation, également illustré sur la figure 8, la solidarisation de l'obturateur vis-à-vis du coulisseau est réalisée de manière latérale, par engagement de la collerette 111 dans une fente 230 ménagée dans le coulisseau, ladite fente s'étendant dans un plan perpendiculaire à la direction de coulissement de l'obturateur. Un avantage d'une telle liaison est qu'elle autorise un coulissement de la collerette dans la fente dans le plan susmentionné, voire dans une direction perpendiculaire audit plan, permettant ainsi d'absorber d'éventuelles dilatations thermiques entre le distributeur et la semelle.

De manière alternative, illustrée à la figure 9, la solidarisation de l'obturateur vis-à-vis du coulisseau est réalisée de manière axiale, la tige de l'obturateur étant insérée et maintenue dans une rondelle 114 coaxiale avec ladite tige et emprisonnée dans une fente 230 du coulisseau. La rondelle 114 est apte à se déplacer radialement dans la fente afin d'absorber d'éventuelles dilatations thermiques entre le distributeur et la semelle.

Une bielle 25 est agencée entre l'excentrique 21 et le coulisseau 23. La bielle comprend un orifice 25a adapté pour s'engager sur le maneton 22 de l'excentrique et permettre l'entraînement de la bielle en rotation, et un axe d'articulation 25b perpendiculaire à l'axe de coulissement de l'obturateur. Le coulisseau est monté sur ledit axe d'articulation par une liaison pivot.

Le coulisseau 23 est lui-même monté en coulissement dans un guide 24 s'étendant selon l'axe X, de sorte qu'un mouvement de rotation de la bielle provoque un mouvement de translation du coulisseau dans le guide, le coulisseau entraînant l'obturateur en translation selon l'axe X.

Ce mouvement est cyclique, c'est-à-dire que le coulisseau se déplace alternativement de l'avant vers l'arrière (sens d'ouverture de la buse) et de l'arrière vers l'avant (sens de fermeture de la buse). Il n'est donc pas nécessaire d'inverser le sens de rotation de l'arbre de sortie du moteur électrique pour inverser le sens de déplacement de l'obturateur. Cette oscillation de l'obturateur permet, pendant la phase de maintien du cycle d'injection, de forcer une diffusion des lignes de pression au sein de la matière plastique et d'éviter que l'interface entre lignes de pressions ne se fige selon une ligne déterminée qui engendrerait un défaut visible.

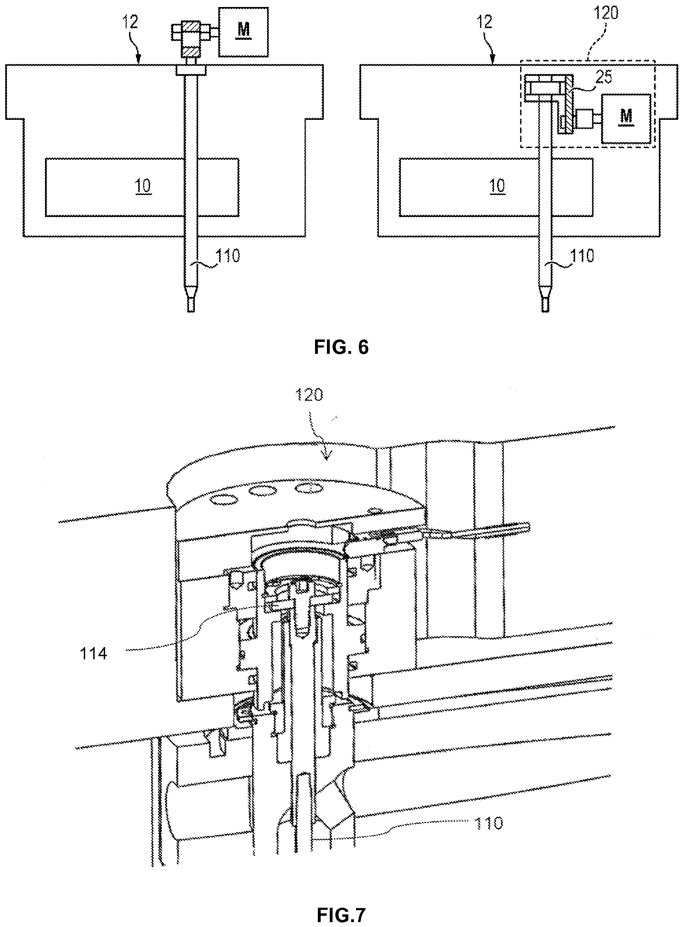

Un autre avantage de l'invention est sa compacité. Les figures 5 et 6 mettent ainsi en évidence la compacité du système selon l'invention (à droite) par rapport à un système à came excentrique du type décrit dans le document US 6,086,357. La figure 5 représente les actionneurs avec leur obturateur respectif. Le couplage du coulisseau à l'arbre de sortie du moteur par l'intermédiaire de l'ensemble excentrique 21 / maneton 22 / bielle 25 permet de réduire l'encombrement de l'actionneur selon l'axe X par rapport à l'actionneur selon l'état de la technique. Cela se traduit par une différence d'emplacement de l'actionneur par rapport à la semelle 12, comme illustré sur la figure 6. Ainsi, l'actionneur selon l'invention peut être agencé dans un logement 120 ménagé à l'intérieur de la semelle ; en revanche, l'actionneur selon l'état de la technique doit être agencé à l'arrière de la semelle, au détriment de l'épaisseur du moule. Par ailleurs, comme exposé plus haut, le couplage de l'obturateur avec le coulisseau par engagement de la collerette 111 dans la fente 230 à l'intérieur de laquelle elle peut coulisser permet de compenser les différences de dilatation thermique entre la buse et le moteur. Une telle gestion des différences de dilatation thermique n'est pas réalisable dans l'actionneur à came excentrique selon l'état de la technique.

Un avantage supplémentaire de l'invention est que l'actionneur électrique qui vient d'être décrit est interchangeable avec un vérin hydraulique ou pneumatique. En effet, l'actionneur électrique peut être installé dans le logement 120 initialement prévu dans la semelle pour un vérin hydraulique ou pneumatique, et l'attelage de l'obturateur avec l'actionneur est identique à celui prévu pour un vérin.

Il est donc aisé de modifier un système d'injection comprenant initialement un vérin hydraulique ou pneumatique pour passer à un actionnement électrique de l'obturateur.

La figure 7 illustre ainsi le système d'injection de la figure 1 avec un vérin hydraulique. Le piston dudit vérin comprend une fente dans laquelle est logée une rondelle 114 apte à se déplacer radialement dans ladite fente pour absorber d'éventuelles dilatations thermiques entre le distributeur et la semelle. La tige de l'obturateur 110 est montée sur ladite rondelle par exemple au moyen d'une vis.

La figure 8 illustre le système d'injection de la figure 1 avec un actionneur électrique tel que décrit plus haut en référence aux figures 2 à 4. Le moteur électrique M est agencé dans le même logement avec l'arbre de sortie 20 perpendiculaire à l'axe X de l'obturateur. L'obturateur est accouplé radialement au coulisseau 23 par engagement de la collerette 111 dans la fente 230. Aucune adaptation du logement 120 ou de l'obturateur 110 n'est nécessaire pour connecter l'obturateur à l'actionneur électrique.

La figure 9 illustre une variante du système d'injection de la figure 8, dans laquelle, comme expliqué plus haut, l'accouplement entre l'obturateur et le coulisseau est axial. On constatera que cet accouplement est identique à celui entre l'obturateur et le piston du vérin hydraulique de la figure 7. Ainsi, comme dans le mode de réalisation avec accouplement radial, aucune adaptation du logement 120 ou de l'obturateur 110 n'est nécessaire pour connecter l'obturateur à l'actionneur électrique.

Un tel remplacement d'un vérin hydraulique ou pneumatique par un actionneur électrique présente plusieurs avantages. D'une part, l'actionneur électrique permet une plus grande complexité de la loi de positionnement de l'obturateur au cours d'un cycle d'injection. D'autre part, l'actionneur électrique procure une plus grande précision et une plus grande reproductibilité de positionnement et de vitesse de déplacement de l'obturateur. Enfin, le moteur électrique est plus fiable, plus propre et moins sujet à usure qu'un vérin hydraulique ou pneumatique. Un changement de technologie d'actionnement sur un système d'injection existant est donc tout à fait pertinent.

La vitesse de déplacement de l'obturateur est ajustée par un signal électrique émis par un composant d'une carte électronique de commande vers le moteur. De même, un blocage de la course de l'obturateur peut être obtenu par un signal électrique spécifique émis par un composant de la carte électronique de commande vers le moteur.

On obtient ainsi un ajustement fin de la course de l'obturateur, capable d'améliorer sensiblement la qualité des pièces injectées. Cet ajustement est avantageusement spécifique à chaque ensemble actionneur-obturateur que compte le système d'injection, afin d'optimiser le contrôle du flux de matière plastique à l'intérieur de l'empreinte.

La carte électronique de commande est reliée électriquement à une unité de commande séquentielle. Une telle unité de commande, également connue sous le terme de séquenceur, est disponible sur le marché selon différents modèles et ne nécessite pas d'adaptation particulière pour pouvoir être utilisée dans la présente invention.

L'unité de commande séquentielle comprend au moins deux voies de commande, chacune reliée électriquement à un composant de la carte de commande.

L'unité de commande séquentielle est configurée pour envoyer sélectivement un signal électrique de commande par l'une et/ou l'autre desdites voies de commande aux composants de la carte électronique de telle sorte que :
- sous l'effet d'un premier signal envoyé par la première voie, l'arbre de sortie est mû à une première vitesse de rotation, se traduisant par une première vitesse de translation de l'obturateur,
- sous l'effet d'un second signal envoyé par la seconde voie, l'arbre de sortie est mû à une seconde vitesse de rotation différente de la première ou est bloqué, ce qui se traduit respectivement par une seconde vitesse de translation de l'obturateur ou par le blocage de celui-ci.

Dans la mesure où le mouvement décrit par l'axe de la bielle sur lequel est articulé le coulisseau est sinusoïdal, il n'y a pas de proportionnalité entre la vitesse de rotation de l'arbre de sortie et la vitesse de translation de l'obturateur. La vitesse de rotation de l'arbre de sortie du moteur doit donc être contrôlée en continu en fonction de la position angulaire de la bielle pour que la vitesse de translation de l'obturateur soit la vitesse attendue.

Chaque signal de commande peut être transmis sous la forme d'un courant électrique continu ou d'un courant alternatif.

De manière particulièrement avantageuse, l'actionneur ou l'obturateur est pourvu d'un capteur de position couplé à l'unité de commande séquentielle et l'unité de commande séquentielle contrôle l'émission des signaux de commande en fonction des mesures fournies par ledit capteur de position. L'utilisation d'un tel capteur est connue en elle-même et ne nécessite pas d'être décrite plus en détail dans le présent texte. Le fait de générer les signaux de commandes à partir des données de mesure d'un tel capteur de position permet un contrôle plus précis de la séquence d'ouverture-fermeture qu'à partir d'un séquençage purement temporel.

Par ailleurs, l'unité de commande séquentielle peut prendre en compte l'une au moins des données suivantes - combinée(s) aux données du capteur de position susmentionné - pour l'émission des signaux de commande : un temps, la position d'un capteur (par exemple : la position de la vis d'extrusion), une pression ou une température dans l'outillage (moule d'injection ou bloc chaud), un signal de la presse à injecter (par exemple : top injection, top maintien), etc. Ces données sont couramment enregistrées lors de la mise en œuvre du procédé d'injection thermoplastique, et la presse à injecter et l'outillage d'injection sont équipés de capteurs appropriés, couplés à un coffret d'acquisition. L'exploitation de ces données ne nécessite donc pas de moyens d'acquisition développés spécifiquement pour l'invention. L'homme du métier est en mesure de traiter un ou plusieurs desdits signaux et d'en déduire une programmation de chaque séquence d'ouverture-fermeture de l'obturateur.

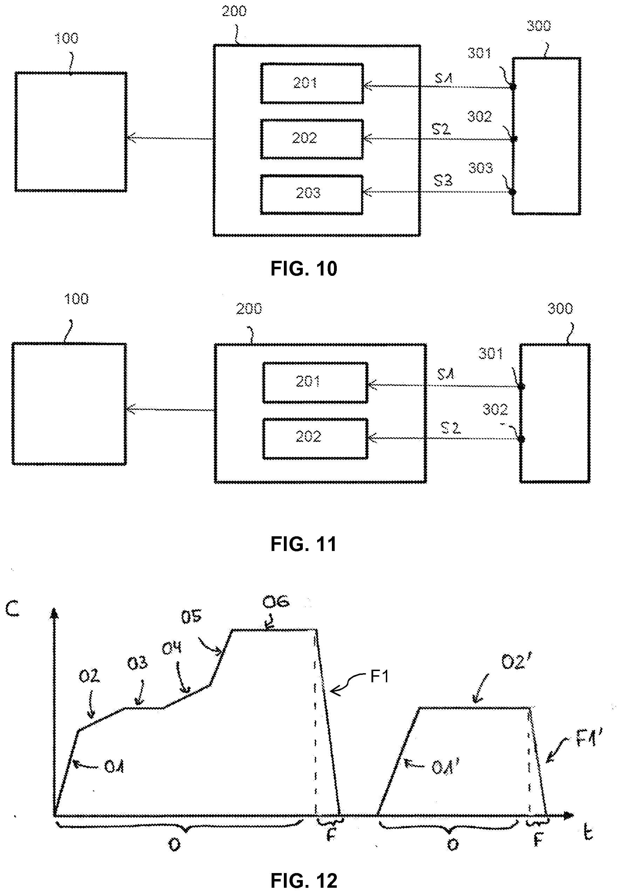

La figure 10 est un schéma bloc du système de commande de l'obturateur selon un mode de réalisation.

L'actionneur est désigné par le repère 100. L'obturateur n'est pas représenté sur cette figure.

La carte électronique de commande 200 de l'actionneur comprend trois composants 201, 202, 203 dont l'un est un composant de régulation de la vitesse du vérin réglé à une première vitesse constante (dite vitesse lente), un autre est un composant de régulation de la vitesse du vérin réglé à une seconde vitesse constante (dite vitesse rapide), supérieure à la première vitesse, et un autre encore est un composant de blocage de la course d'ouverture du vérin.

L'unité de commande séquentielle est désignée par le repère 300. Elle comprend trois voies de sortie 301, 302, 303, chacune reliée à un composant respectif 201, 202, 203 de la carte électronique de commande, permettant de lui envoyer un signal de commande respectif S1, S2, S3.

La figure 11 est un schéma bloc du système de commande de l'obturateur dans un mode de réalisation simplifié dans lequel la carte électronique de commande 200 comprend uniquement deux composants 201, 202. Dans ce cas, on utilise uniquement deux voies 301, 302 de l'unité de commande séquentielle 300.

Quelle que soit la forme d'implémentation, les composants de la carte électronique sont préalablement programmés selon des techniques connues en elle-même.

Comme indiqué plus haut, l'unité de commande comprend au moins deux voies de commande, reliées électriquement chacune à l'un des composants de la carte électronique.

Ainsi, l'envoi d'un signal de commande par une première voie de commande à l'un des composants (par exemple, un composant de réglage de la vitesse de rotation de l'arbre de sortie du moteur) déclenche le fonctionnement du moteur de manière à obtenir la vitesse de translation souhaitée.

Un signal de commande envoyé par une deuxième voie de commande à un autre composant (par exemple, le composant de blocage de la rotation de l'arbre) a pour effet de stopper le moteur pour immobiliser l'obturateur.

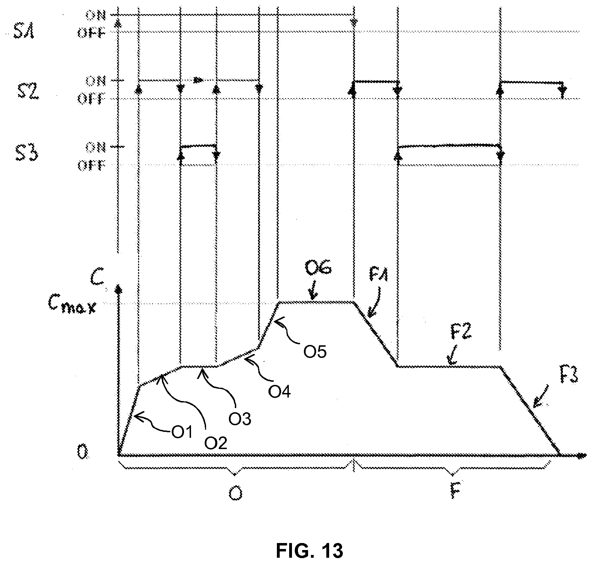

On peut ainsi obtenir différents graphes de la course de l'obturateur au cours d'une séquence d'ouverture-fermeture, dont des exemples nullement limitatifs sont illustrés sur les figures 12 et 13.

La figure 12 illustre un premier exemple de graphe de course de l'obturateur au cours du temps susceptible d'être obtenue avec un système de commande selon l'invention.

Une course nulle correspond à une fermeture totale de l'obturateur.

Une première étape O1 de la phase d'ouverture O est réalisée à vitesse rapide.

Une deuxième étape O2 de la phase d'ouverture O est réalisée à vitesse lente.

Une troisième étape O3 de la phase d'ouverture O est réalisée avec l'obturateur bloqué.

Une quatrième étape O4 de la phase d'ouverture O est réalisée à vitesse lente.

Une cinquième étape O5 de la phase d'ouverture O est réalisée à vitesse rapide.

Dans une sixième étape O6 de la phase d'ouverture O, la course maximale d'ouverture de l'obturateur étant atteinte, celle-ci est bloquée.

L'étape de fermeture F1 est quant à elle à vitesse rapide

Une deuxième séquence d'ouverture-fermeture comprend une première étape O1' à vitesse rapide, une deuxième étape O2' avec l'obturateur bloqué, et une étape de fermeture à vitesse rapide F1'.

La figure 13 illustre un second exemple de graphe de la course C de l'obturateur au cours d'un cycle d'ouverture-fermeture susceptible d'être obtenue avec un système de commande selon l'invention.

Les signaux S1, S2, S3 de chacune des trois voies de l'unité de commande séquentielle reliées respectivement aux composants 201 (régulation à vitesse rapide), 202 (régulation à vitesse lente), 203 (blocage) de la carte électronique de commande présentent soit une amplitude nulle (OFF), soit une amplitude d'une valeur déterminée (ON). L'état OFF correspond à une absence d'alimentation du composant considéré.

Dans une première étape O1 de la phase d'ouverture O, le signal S1 est à l'état ON tandis que les signaux S2 et S3 sont à l'état OFF. L'obturateur entame sa course d'ouverture à la vitesse rapide.

Dans une deuxième étape O2 de la phase d'ouverture O, le signal S1 est toujours à l'état ON et le signal S2 passe à l'état ON, le signal S3 restant à l'état OFF. La course de l'obturateur ralentit à la vitesse lente.

Dans une troisième étape O3 de la phase d'ouverture O, le signal S1 est toujours à l'état ON et le signal S3 passe à l'état ON, le signal S2 passant à l'état OFF ou non. La course de l'obturateur est alors bloquée.

Dans une quatrième étape O4 de la phase d'ouverture O, le signal S1 est toujours à l'état ON et le signal S2 passe à l'état ON, le signal S3 passant à l'état OFF. La course de l'obturateur reprend alors avec la vitesse lente.

Dans une cinquième étape O5 de la phase d'ouverture O, le signal S1 est toujours à l'état ON et le signal S2 passe à l'état OFF, le signal S3 restant à l'état OFF. La course de l'obturateur se poursuit alors avec la vitesse rapide.

Dans une sixième étape O6 de la phase d'ouverture O, le signal S1 est toujours à l'état ON. La course maximale d'ouverture Cₘₐₓ de l'obturateur étant atteinte, celle-ci est bloquée.

Pour engager la phase de fermeture F, le signal S1 passe à l'état OFF. Le signal S2 passe à l'état ON et le signal S3 reste à l'état OFF, une vitesse lente de fermeture est ainsi imposée pendant l'étape F1.

Dans une deuxième étape F2 de fermeture, le signal S3 passe à l'état ON et entraîne un blocage de l'obturateur, le signal S2 restant à l'état ON ou passant à l'état OFF.

Dans une troisième étape F3 de fermeture, le signal S3 passe à l'état OFF et le signal S2 passe (ou reste) à l'état ON, entraînant ainsi une fermeture à vitesse lente.

Il va de soi que les exemples que l'on vient de donner ne sont que des illustrations particulières en aucun cas limitatives quant aux profils d'ouverture-fermeture de l'obturateur.

### REFERENCES

US 6,294,122
EP 2 679 374
EP 2 918 289
US 6,086,357
EP 1 196 274

## Revendications

1. Système de commande d'un obturateur (110) agencé en coulissement dans une buse (11) d'injection de matière plastique, comprenant un moteur électrique rotatif (M) et un mécanisme adapté pour coupler ledit moteur (M) à l'obturateur pour l'entraîner en coulissement entre une position d'obturation de la buse et une position d'ouverture maximale de la buse, **caractérisé en ce que** ledit mécanisme comprend :
- un excentrique (21) solidaire d'un arbre de sortie (20) du moteur de sorte à être entraîné en rotation par ledit arbre de sortie, comprenant un maneton (22) parallèle à l'arbre de sortie mais non coaxial avec ledit arbre (20),
- un coulisseau (23) adapté pour être solidarisé à une extrémité de l'obturateur (110), et
- une bielle (25) dont une première extrémité est articulée sur le maneton (22) de l'excentrique (21) et une seconde extrémité est articulée sur un axe (25b) du coulisseau (23) de sorte que la rotation de l'excentrique engendre un coulissement de l'obturateur oscillant entre la position d'obturation et la position d'ouverture maximale.

2. Système selon la revendication 1, dans lequel l'axe (Y) de rotation de l'arbre de sortie du moteur électrique est perpendiculaire à l'axe (X) de coulissement de l'obturateur.

3. Système selon l'une des revendications 1 ou 2, comprenant un guide (24) dans lequel ledit coulisseau (23) est agencé en coulissement.

4. Système selon l'une des revendications 1 à 3, dans lequel ladite extrémité de l'obturateur (110) comprend une collerette radiale (111) et le coulisseau (23) comprend une fente (230) adaptée pour recevoir ladite collerette (111), ladite fente s'étendant dans un plan perpendiculaire à la direction (X) de coulissement de l'obturateur.

5. Système selon l'une des revendications 1 à 3, dans lequel le coulisseau (23) comprend une fente (230) et une rondelle (114) apte à se déplacer radialement dans ladite fente, et l'extrémité de l'obturateur (110) est solidarisée à ladite rondelle (114).

6. Système d'injection de matière plastique, comprenant :
- un distributeur (10) comprenant au moins une buse d'injection (11),
- au moins un obturateur (110) monté en coulissement dans la buse d'injection entre une position d'obturation de la buse et une position d'ouverture maximale de la buse,
- une semelle (12) comprenant un logement (120) dans lequel est agencé le système de commande de l'obturateur selon l'une des revendications 1 à 5,
- une carte électronique de commande (200) de l'actionneur, comprenant au moins deux composants parmi :
un composant adapté pour réguler l'ouverture ou la fermeture de l'obturateur à une première vitesse constante,
un composant adapté pour réguler l'ouverture ou la fermeture de l'obturateur à une seconde vitesse constante, supérieure à la première vitesse,
un composant adapté pour sélectivement bloquer la rotation du moteur,
- une unité de commande séquentielle comprenant au moins deux voies de commande (301, 302, 303) configurée pour envoyer sélectivement un signal électrique de commande à la carte électronique (200) par une desdites voies de commande (301, 302, 303) de telle sorte que :
- sous l'effet d'un premier signal envoyé par une première voie de commande, l'un des composants est activé,
- sous l'effet d'un second signal envoyé par une seconde voie de commande, un autre composant est activé.

7. Système selon la revendication 6, dans lequel l'actionneur et/ou l'obturateur est pourvu d'un capteur de position et l'unité de commande séquentielle est configurée pour contrôler l'émission des signaux de commande en fonction des mesures fournies par ledit capteur de position.

8. Système selon l'une des revendications 6 ou 7, dans lequel l'unité de commande séquentielle est configurée pour prendre en outre en compte au moins l'une des données suivantes : un temps du procédé d'injection, une position d'un capteur, une pression ou une température dans l'outillage d'injection, un signal de la presse à injecter.

9. Système selon l'une des revendications 6 à 8, dans lequel l'unité de commande séquentielle est configurée pour envoyer un signal électrique de commande sous la forme d'un courant continu.

10. Système selon l'une des revendications 6 à 8, dans lequel l'unité de commande séquentielle est configurée pour envoyer un signal électrique de commande sous la forme d'un courant alternatif.

11. Procédé de modification d'un système d'injection de matière plastique, dans lequel ledit système comprend :
- un distributeur (10) comprenant au moins une buse d'injection (11),
- au moins un obturateur (11) monté en coulissement dans la buse d'injection entre une position d'obturation de la buse et une position d'ouverture maximale de la buse,
- une semelle (12) comprenant un logement (120) dans lequel est agencé un vérin hydraulique ou pneumatique de commande de l'obturateur,
ledit procédé étant **caractérisé en ce qu'**il comprend le retrait du vérin et le remplacement dudit vérin dans le logement (120) par un système de commande selon l'une des revendications 1 à 5.

## Patentansprüche

1. System zur Steuerung einer Blende (110), die schiebbar in einer Kunststoffeinspritzdüse (11) angeordnet ist, einen elektrischen Rotationsmotor (M) und einen Mechanismus umfassend, der angepasst ist, um den Motor (M) mit der Blende zu koppeln, um sie zwischen einer Verschlussposition der Düse und einer maximalen Öffnungsposition der Düse verschiebend anzutreiben, **dadurch gekennzeichnet, dass** der Mechanismus umfasst:
- einen Exzenter (21), der fest mit einer Ausgangswelle (20) des Motors verbunden ist, um durch die Ausgangswelle in Drehung angetrieben zu werden, der einen Kurbelzapfen (22) parallel zur Ausgangswelle, jedoch nicht koaxial mit der Welle (20) umfasst,
- einen Schieber (23), der angepasst ist, um fest mit einem Ende der Blende (110) verbunden zu sein, und
- eine Kurbelstange (25), von der ein erstes Ende an dem Kurbelzapfen (22) des Exzenters (21) angelenkt ist, und ein zweites Ende an einer Achse (25b) des Schiebers (23) angelenkt ist, sodass die Drehung des Exzenters eine Verschiebung der oszillierenden Blende zwischen der Verschlussposition und der maximalen Öffnungsposition verursacht.

2. System nach Anspruch 1, wobei die Drehachse (Y) der Ausgangswelle des Elektromotors senkrecht zur Verschiebeachse (X) der Blende verläuft.

3. System nach einem der Ansprüche 1 oder 2, das eine Führung (24) umfasst, in der der Schieber (23) verschiebbar angeordnet ist.

4. System nach einem der Ansprüche 1 bis 3, wobei das Ende der Blende (110) einen radialen Kragenring (111) umfasst, und der Schieber (23) einen Spalt (230) umfasst, der angepasst ist, um den Kragenring (111) aufzunehmen, wobei sich der Spalt in einer Ebene senkrecht zur Verschieberichtung (X) der Blende erstreckt.

5. System nach einem der Ansprüche 1 bis 3, wobei der Schieber (23) einen Spalt (230) und eine Scheibe (114) umfasst, die imstande ist, sich radial in dem Spalt zu bewegen, und das Ende der Blende (110) fest mit der Scheibe (114) verbunden ist.

6. Kunststoffeinspritzsystem, umfassend:
- einen Verteiler (10), der mindestens eine Einspritzdüse (11) umfasst,
- mindestens eine Blende (110), die in der Einspritzdüse zwischen einer Verschlussposition der Düse und einer maximalen Öffnungsposition der Düse verschiebbar montiert ist,
- eine Sohle (12), die eine Aufnahme (120) umfasst, in der das System zum Steuern der Blende nach einem der Ansprüche 1 bis 5 angeordnet ist,
- eine elektronische Steuerkarte (200) des Stellantriebs, die mindestens zwei Komponenten umfasst, darunter:
eine Komponente, die angepasst ist, um das Öffnen oder das Schließen der Blende mit einer ersten konstanten Geschwindigkeit zu regeln,
eine Komponente, die angepasst ist, um das Öffnen oder das Schließen der Blende mit einer zweiten konstanten Geschwindigkeit, größer als die erste Geschwindigkeit, zu regeln,
eine Komponente, die angepasst ist, um die Drehung des Motors selektiv zu sperren,
- eine Ablaufsteuerungseinheit, die mindestens zwei Steuerungswege (301, 302, 303) umfasst, die konfiguriert ist, um selektiv ein elektrisches Steuersignal an die elektronische Karte (200) über einen der Steuerungswege (301, 302, 303) zu senden, sodass:
- unter der Wirkung eines ersten Signals, das über eine ersten Steuerungsweg gesendet wird, eine der Komponenten aktiviert wird,
- unter der Wirkung eines zweiten Signals, das über einen zweiten Steuerungsweg gesendet wird, eine andere Komponente aktiviert wird.

7. System nach Anspruch 6, wobei der Stellantrieb und/oder die Blende mit einem Positionssensor versehen ist, und die Ablaufsteuerungseinheit konfiguriert ist, um die Sendung der Steuersignale in Abhängigkeit von den Messwerten zu kontrollieren, die von dem Positionssensor bereitgestellt werden.

8. System nach einem der Ansprüche 6 oder 7, wobei die Ablaufsteuerungseinheit konfiguriert ist, um weiter mindestens eines der folgenden Daten zu berücksichtigen:
eine Zeit des Einspritzverfahrens, eine Position eines Sensors, einen Druck oder eine Temperatur in dem Einspritzwerkzeug, ein Signal der Einspritzpresse.

9. System nach einem der Ansprüche 6 bis 8, wobei die Ablaufsteuerungseinheit konfiguriert ist, um ein elektrisches Steuersignal in Form eines Gleichstroms zu senden.

10. System nach einem der Ansprüche 6 bis 8, wobei die Ablaufsteuerungseinheit konfiguriert ist, um ein elektrisches Steuersignal in Form eines Wechselstroms zu senden.

11. Verfahren zum Ändern eines Kunststoffeinspritzsystems, wobei das System umfasst:
- einen Verteiler (10), der mindestens eine Einspritzdüse (11) umfasst,
- mindestens eine Blende (11), die in der Einspritzdüse zwischen einer Verschlussposition der Düse und einer maximalen Öffnungsposition der Düse verschiebbar montiert ist,
- eine Sohle (12), die eine Aufnahme (120) umfasst, in der ein Hydraulik- oder Pneumatikzylinder zum Steuern der Blende angeordnet ist,
wobei das Verfahren **dadurch gekennzeichnet ist, dass** es die Entnahme des Zylinders, und den Ersatz des Zylinders in der Aufnahme (120) durch ein System zur Steuerung nach einem der Ansprüche 1 bis 5 umfasst.

## Claims

1. A control system for a valve member (110) slidably arranged in a plastic injection nozzle (11), comprising a rotary electric motor (M) and a mechanism adapted to couple said motor (M) to the valve member to drive it slidably between a nozzle closing position and a nozzle maximum opening position, **characterized in that** said mechanism comprises:
- an eccentric (21) integral with an output shaft (20) of the motor so as to be rotated by said output shaft, comprising a crank pin (22) parallel to the output shaft but not coaxial with said shaft (20),
- a slider (23) adapted to be attached to one end of the shutter (110), and
- a connecting rod (25), a first end of which is articulated on the crank pin (22) of the eccentric (21) and a second end of which is articulated on a pin (25b) of the slide (23) so that the rotation of the eccentric generates a sliding of the shutter oscillating between the shut-off position and the maximum opening position.

2. The system of claim 1, wherein the axis (Y) of rotation of the output shaft of the electric motor is perpendicular to the axis (X) of sliding of the shutter.

3. A system according to any of claims 1 or 2, comprising a guide (24) in which said slider (23) is slidably arranged.

4. A system according to any of claims 1 to 3, wherein said end of the shutter (110) comprises a radial flange (111) and the slider (23) comprises a slot (230) adapted to receive said flange (111), said slot extending in a plane perpendicular to the direction (X) of sliding of the shutter.

5. A system according to any one of claims 1 to 3, wherein the slider (23) comprises a slot (230) and a washer (114) adapted to move radially in said slot, and the end of the shutter (110) is integral with said washer (114).

6. Plastic injection system, comprising:
- a manifold (10) comprising at least one injection nozzle (11),
- at least one shutter (110) slidably mounted in the injection nozzle between a nozzle shut-off position and a nozzle maximum opening position,
- a base plate (12) comprising a housing (120) in which the shutter control system according to one of claims 1 to 5 is arranged,
- an electronic control board (200) of the actuator, comprising at least two components from:
a component adapted to regulate the opening or closing of the shutter at a first constant speed,
a component adapted to regulate the opening or closing of the shutter at a second constant speed, higher than the first speed,
a component adapted to selectively block the rotation of the motor,
- a sequential control unit comprising at least two control channels (301, 302, 303) configured to selectively send an electrical control signal to the electronic board (200) through one of said control channels (301, 302, 303) such that:
- a first signal from a first control channel activates one of the components,
- a second signal from a second control channel activates another component.

7. A system according to claim 6, wherein the actuator and/or shutter is provided with a position sensor and the sequence control unit is configured to control the output of control signals based on measurements provided by said position sensor.

8. A system according to any of claims 6 or 7, wherein the sequence control unit is configured to further take into account at least one of the following data: a time of the injection process, a position of a sensor, a pressure or temperature in the injection tooling, a signal from the injection moulding machine.

9. The system according to any of claims 6 to 8, wherein the sequence control unit is configured to send an electrical control signal in the form of a direct current.

10. A system according to any of claims 6 to 8, wherein the sequence control unit is configured to send an electrical control signal in the form of an alternating current.

11. A method of modifying a plastic injection system, wherein said system comprises:
- a manifold (10) comprising at least one injection nozzle (11),
- at least one shutter (11) slidably mounted in the injection nozzle between a nozzle shut-off position and a nozzle maximum opening position,
- a base plate (12) comprising a housing (120) in which a hydraulic or pneumatic actuator for controlling the shutter is arranged,
said method being **characterised in that** it comprises removing the actuator and replacing said actuator in the housing (120) with a control system according to any of claims 1 to 5.
